(19) Europäisches Patentamt
European Patent Office
Office européen des brevets

(11) **EP 2 186 633 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*B32B 27/06* (2006.01)   *B32B 27/18* (2006.01)
*B32B 27/20* (2006.01)   *B32B 27/36* (2006.01)
*B65D 65/40* (2006.01)   *B65D 81/00* (2006.01)

(21) Anmeldenummer: **09013938.7**

(22) Anmeldetag: **06.11.2009**

(54) **Mehrschichtige, weisse, biaxial orientierte Polyesterfolie mit metallisch glänzender Deckschicht**

Multilayer, white, biaxially oriented polyester film with metallic, shining covering layer

Feuille de polyester multicouche blanche et orientée de manière bi-axiale, dotée d'une couche de revêtement métallique brillante

(84) Benannte Vertragsstaaten:
**CH DE ES FI FR GB IT LI LU NL PL SE TR**

(30) Priorität: **12.11.2008 DE 102008056870**

(43) Veröffentlichungstag der Anmeldung:
**19.05.2010 Patentblatt 2010/20**

(73) Patentinhaber: **Mitsubishi Polyester Film GmbH**
**65203 Wiesbaden (DE)**

(72) Erfinder:
• **Jesberger, Martin**
**55122 Mainz (DE)**
• **Kliesch, Holger**
**65462 Ginsheim (DE)**
• **Kuhmann, Bodo**
**65594 Runkel (DE)**
• **Fischer, Ingo**
**65558 Heistenbach (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
EP-A1- 1 806 225    EP-A1- 1 859 933
EP-A2- 1 614 536    EP-A2- 1 902 839
EP-A2- 1 918 096    DE-A1-102005 058 916

**Beschreibung**

Die Erfindung betrifft eine mehrschichtige, einseitig weiße, biaxial orientierte Polyesterfolie mit metallisch glänzender Deckschicht umfassend eine Basisschicht (B) enthaltend einen thermoplastischen Polyester und ein Weißpigment sowie mindestens eine Deckschicht (A). Die Deckschicht (A) enthält neben einem Weißpigment zusätzlich ein farbgebendes Pigment und Ruß mit einer vorgegebenen Korngröße und in einer bestimmten Menge. Die Erfindung betrifft weiter ein Verfahren für die Herstellung der Folie und ihre Verwendung.

Weiße oder opake, biaxial orientierte Polyesterfolien, insbesondere für die Deckelanwendung von Becherverpackungen für Nahrungsmittel, sind nach dem Stand der Technik bekannt.

Die EP 0 605 130 B1 beschreibt eine mehrschichtige, koextrudierte Verbundfolie mit einer Dicke im Bereich von 30 bis 400 $\mu$m. Die Folie umfasst eine trübe kristalline erste Polyesterschicht, die im Wesentlichen für sichtbares Licht undurchlässig ist, eine Dichte von mehr als 1,30 g/cm$^3$, eine Dicke von größer als oder gleich 25 $\mu$m und einen Verformungsindex von größer als oder gleich 2,5 % aufweist. Der Verformungsindex wird bei einer Temperatur von 200 °C und unter einem Druck von 2 MPa gemessen. Daneben umfasst die Folie eine transparente kristalline zweite Polyesterschicht, die "substantially permeable to visible light" ist und eine TOD (transmission optical density) von 0,005 bis 0,2 aufweist. Weiterhin ist im Sinne der Erfindung eine Transparenz dieser Schicht noch gegeben, wenn in ihr weniger als 2 % Partikel vorhanden sind, die eine Teilchengröße im Bereich von 0,1 bis 10 $\mu$m haben.

Die EP 1 176 004 A1 beschreibt eine weiße, biaxial orientierte Polyesterfolie mit mindestens einer Basisschicht (B), die sich auf Grund ihrer speziellen mechanischen Eigenschaften sehr gut als Deckelfolie, insbesondere als Deckelfolie für Joghurtbecher eignet. Die bekannte Folie ist **dadurch gekennzeichnet, dass** der R-Wert kleiner/gleich 45 dN/mm$^2$ und das $e_{max}$-Verhältnis kleiner/gleich als 2,5 ist. Durch das Einhalten dieser Werte neigt die Folie weniger zum Delaminieren und zeigt ein gutes Abziehverhalten vom Becher. Die Folie zeichnet sich weiter durch eine gute Opazität aus, sie weist jedoch Defizite bei ihrer Herstellung (keine optimale Rollenaufmachung) und in ihren optischen Eigenschaften auf.

Die Verwendung von Schichtsilikaten in biaxial orientierten Polyesterfolien ist nach dem Stand der Technik bekannt.

In EP 1 489 131 A1 ist der Zusatz von Glimmer und aromatischem Polyester in Monofolien beschrieben. Die Effektpigmente haben dabei einen Durchmesser von 0,5 bis 125 $\mu$m und wurden mit 0,5 bis 30 Gew.-%, basierend auf das Gesamtgewicht der Folie, eingesetzt. Die Folie findet dank ihrer optischen Eigenschaften, wie z. B. Reflektion, in Displays mit Flüssigkristallen Anwendung.

Metallisierte, weiße Polyesterfolien, insbesondere für die Joghurtdeckelanwendung, sind nach dem Stand der Technik bekannt.

Die weiß-metallisierten Folien werden in der Verpackungstechnologie als Deckelfolie eingesetzt. Vorteilhaft wirkt sich dabei in vielen Anwendungen neben der gewünschten metallisch-glänzenden Schicht die optische Dichte aus. Eine niedrige Transparenz des Deckels ist jedoch nicht immer erforderlich und auch nicht ökonomisch. Gleichwohl assoziiert der Endverbraucher mit der metallisch-glänzenden Schicht oft die Gewissheit, dass das Lebensmittel darunter besonders gut vor schädlichen Umwelteinflüssen abgeschirmt ist.

Die EP-A-1 918 096 offenbart eine Mehrschichtfolie, deren Basisschicht 2 - 35 Gew.-% Weißpigment und 0,1 - 15 Gew.-% eines Laserenergie absorbierenden Pigments und gegebenenfalls weniger als 0,75 Gew.-% Ruß enthält. Die Laserenergie absorbierenden Pigmente können dabei Silikate wie Glimmer sein, die beispielsweise mit Mischoxiden wie Antimontrioxid/Zinnoxid (ATO) oder Indiumoxid/Zinnoxid (ITO) beschichtet sind. Die Deckschicht der Folie gemäß EP-A-1 918 096 enthält weniger als 0,5 Gew.-% dieser Laserenergie absorbierenden Pigmente, bevorzugt gar keine.

Die DE-A-10 2005 058 916 beschreibt eine weiße Polyesterfolie aus einer Basisschicht und mindestens einer Deckschicht, wobei die Basisschicht 3 bis 15 Gew.-% eines Weißpigments enthält und die Deckschicht sowohl ein Weißpigment als auch ein Antiblockmittel enthält. Beschichtete Glimmerpartikel werden dort nicht erwähnt.

Aufgabe der vorliegenden Erfindung war es daher, eine weiße, biaxial orientierte Polyesterfolie mit metallisch-glänzender Deckschicht in einem Prozessschritt ohne anschließende Metallisierung, insbesondere für die Anwendung als Deckelfolie auf Becherverpackungen, bereitzustellen, die sich gegenüber den am Markt etablierten, metallisierten, weißen Polyesterfolien durch verbesserte Eigenschaften auszeichnet, wozu insbesondere zu zählen sind:

- niedrigere Transparenz als weiße Deckelfolien nach dem Stand der Technik;
- feste Haftung der metallisch-glänzenden Schicht auf der Polyesterfolie;
- Eignung des Deckels in der Mikrowelle.

Die Aufgabe wird erfindungsgemäß gelöst durch eine weiße, koextrudierte, biaxial orientierte Polyesterfolie mit einer Basisschicht (B) aus thermoplastischem Polyester und mindestens einer Deckschicht (A) aus thermoplastischem Polyester, dadurch gekennzeichnet, dass

a) die Basisschicht (B) - die einen Anteil von 50 bis 95 % an der Gesamtfolienstärke einnimmt - ein weißfärbendes Pigment in einer Konzentration von 3 bis 15 Gew.-% enthält, bezogen auf das Gesamtgewicht der Basisschicht (B), und

b) die Deckschicht (A) neben einem weißfärbenden Pigment in einer Konzentration von 3 bis 15 Gew.-% zusätzlich ein farbgebendes beschichtetes Schichtsilikat in einer Konzentration von 0,5 bis 15 Gew-% und Ruß in einer Konzentration von 0,001 bis 0,2 Gew-%, jeweils bezogen auf das Gesamtgewicht der Deckschicht (A), enthält,

wobei das Schichtsilikat ein Glimmer ist, der mit Rutil-Titandioxid oder mit Titandioxid und Zinnoxid beschichtet ist.

Die weiße, biaxial orientierte Folie gemäß der vorliegenden Erfindung ist zumindest zweischichtig aufgebaut. Sie besteht dann aus der Basisschicht (B) und der einseitig auf dieser durch Koextrusion aufgebrachten Deckschicht (A), wobei beide Schichten zumindest ein Weißpigment enthalten und wobei die Deckschicht (A) zusätzlich ein farbgebendes beschichtetes Schichtsilikat in einer bevorzugten Konzentration von 0,5 bis 15 Gew-% und Ruß in einer Menge von 0,001 bis 0,2 Gew.-% enthält.

Besonders vorteilhaft wirkt sich die erfindungsgemäße Folie in der Deckelanwendung für Becherverpackungen in der Lebensmittelindustrie aus. Während metallisierte Folien Störungen in der Mikrowelle beim Erwärmen von Fertiggerichten, wie z.B. von heißem Milchreis, durch das Auftreten von Koronaentladungen aufweisen, kann mit der erfindungsgemäßen Folie diese Anwendung störungsfrei bedient werden.

In der bevorzugten Ausführungsform ist die Folie drei- oder sogar mehr als dreischichtig, beispielsweise vier- oder fünfschichtig, aufgebaut.

Im Falle der bevorzugten dreischichtigen Ausführungsform besteht die Folie aus der Basisschicht (B), der Deckschicht (A) und einer weiteren, der Deckschicht (A) gegenüberliegend angeordneten Deckschicht (C). Besonders bevorzugt ist hierbei der unsymmetrische dreischichtige Aufbau (ABC), bei dem die Schicht (C) eine modifizierte Schicht der Basisschicht (B) darstellt. Die Deckschicht (C) enthält neben dem Weißpigment ein Antiblockmittel, das für die bessere Wicklung der Folie sorgt.

Überraschend wurde gefunden, dass bei der bevorzugten Verwendung von im Wesentlichen $TiO_2$ vom Rutiltyp als weißfärbendem Pigment die Folie weniger anfällig gegenüber Einreißen und Delaminierung ist. Die Zugabe des $TiO_2$ bevorzugt über die Masterbatchtechnologie hat den Vorteil, dass Farbunterschiede, z. B. durch nicht konstante Regenerateigenschaften, leicht korrigiert werden können.

Die Zugabe von Schichtsilikat und Ruß, bevorzugt über die Masterbatchtechnologie zur Erzeugung der metallisch-glänzenden, nach Aluminium aussehenden Deckschicht (A), hat sich ebenso als besonders vorteilhaft herausgestellt. Während bei der Direktzugabe dieser beiden Additive Agglomerate gebildet wurden und infolgedessen Farbunterschiede auf der metallisch-glänzenden Seite auftraten, konnte mit der Masterbatchtechnologie eine sehr gut homogene Schicht erzeugt werden.

Verwendete Polymere für die Basisschicht (B) und für die Deckschicht (A).

## Basisschicht (B)

Die Basisschicht (B) der Folie besteht zu mindestens 80 Gew.-%, bevorzugt zu mindestens 85 Gew.-% und besonders bevorzugt zu mindestens 90 Gew.-%, aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly (1,4-cyclohexandimethylenterephthalat, PCDT)] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. anderen Dicarbonsäuren. Bevorzugt besteht die Basisschicht aus PET. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen.

Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Deckschicht (A)

Für die Deckschicht (A) und für eventuell vorhandene weitere Zwischenschichten (D) und (E) werden bevorzugt die gleichen Polyester verwendet, wie sie zuvor für die Basisschicht (B) angegeben wurden. Zusätzlich wird das weißfärbende Pigment mit der Masterbatchtechnologie eingearbeitet. Die verwendeten Schichtsilikate (Glimmer) und der Kohlenstoff (Ruß) werden ebenfalls bevorzugt in die Deckschicht mit der Masterbatchtechnologie eingearbeitet.

**Weißfärbendes Pigment**

Zur Erzielung der vorgenannten Eigenschaften, insbesondere des gewünschten Weißgrades der Folie, werden in die Basisschicht (B) und in die Deckschicht (A), eventuell aber auch in vorhandene andere Schichten die notwendigen weißfärbenden Pigmente eingearbeitet. In Frage kommen z.B. Titandioxid, Calciumcarbonat, Bariumsulfat, Zinksulfid oder Zinkoxid. In bevorzugter Weise wird $TiO_2$ als alleiniges weißfärbendes Pigment verwendet. Es wird bevorzugt als Extrusionsmasterbatch dem Originalrohstoff zugegeben. Typische Bereiche für die $TiO_2$-Konzentration im Extrusionsmasterbatch sind 20 bis 70 Gew.-%. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die so eingearbeiteten Pigmente in den vorgesehenen Konzentrationen ein brillantes weißes Aussehen.

**Schichtsilikat (Glimmer) und Ruß**

Die Schichtsilikate (Glimmer) haben eine chemische Zusammensetzung entsprechend der folgenden allgemeinen Formel (Quelle: Wikipedia, Freie Enzyklopadie):

$$I_{0,5-1}M_{2-3} [T_4O_{10}A_2]$$

I: 12-fach koordinierte Kationen (Kalium, Natrium, Kalzium, Barium, Rubidium, Cäsium, Ammonium)
M: 6-fach koordinierte Kationen (Lithium, Magnesium, Eisen$^{2+}$, Mangan, Zink, Aluminium, Eisen$^{3+}$, Chrom, Vanadium, Titan)
T: 4-fach koordinierte Kationen (Silizium, Aluminium, Eisen$^{3+}$, Bor, Beryllium)
A: Anion (Hydroxid, Fluorid, Chlorid, Oxid, Sulfid)

Als besonders vorteilhaft für die Einarbeitung in den Polyester haben sich Glimmer herausgestellt, die mit Rutil-Titandioxid beschichtet sind. Diese silbrig aussehenden Füllstoffe lassen sich in Konzentrationen bis zu 50 Gew.-% in den Polyester einarbeiten. Durch den weiteren Zusatz von Ruß können die Farbnuancen entsprechend eingestellt werden, so dass völlig überraschend der Farbton der Aluminiumfolie nachgestellt werden kann. Besonders geeignete beschichtete Glimmer, die zu diesen brillanten, völlig unerwarteten Ergebnissen geführt haben sind die mit Titandioxid und Zinnoxid beschichteten Schichtsilikate der Firma Merck, DE, die unter dem Handelsnamen Iriodin® 111 im Handel erhältlich sind. Als geeignete Ruße haben sich die Industrieruße der Firma Cabot, Black Pearls 4750 und Black Pearls 4350, herausgestellt. Der Anteil an extrahierbaren Bestandteilen gemäß ISO 6209 mit Toluol als Lösemittel liegt bevorzugt bei < 0,1 %. Die Jodzahl dieser Ruße liegt nach Herstellerangaben bei < 300 mg/g. Die Partikelgröße der Primärteilchen beträgt, ebenfalls nach Herstellerangaben, < 1 $\mu$m, bevorzugt < 0,5 $\mu$m, besonders bevorzugt < 0,2 $\mu$m.

Um zu dem gewünschten Weißgrad von größer als 50 und zu der gewünschten niedrigen Transparenz von kleiner als 10 % zu gelangen, sollte die Basisschicht (B) hochgefüllt sein. Die Konzentration an weißfärbendem Pigment zur Erzielung der gewünschten niedrigen Transparenz liegt bei über 3 Gew.-%, jedoch unterhalb von 15 Gew.-%, vorzugsweise über 3,5 Gew.-%, jedoch unterhalb 14 Gew.-% und ganz besonders bevorzugt oberhalb 4 Gew.-%, jedoch unterhalb 13 Gew.-%, bezogen auf das Gesamtgewicht der sie enthaltenden Schicht.

Zu einer weiteren Steigerung des Weißgrades können geeignete optische Aufheller der Basisschicht und/oder der Schicht (C) zugesetzt werden. Geeignete optische Aufheller sind beispielsweise Hostalux® KS der Firma Clariant oder Eastobrite® OB-1 der Firma Eastman.

Bei der erfindungsgemäßen Folie ist die Dicke der Deckschicht (A) im Allgemeinen größer als 1,0 μm und kleiner als 8,0 μm und liegt bevorzugt im Bereich von 1,5 bis 7,0 μm, besonders bevorzugt im Bereich von 2,0 bis 6,0 μm.

Die Basisschicht (B) wie auch die weiteren Schichten (A) und (C) können zusätzlich übliche Additive wie z.B. Stabilisatoren enthalten. Sie werden üblicher Weise dem Polymer oder der Polymermischung vor dem Aufschmelzen zugesetzt. Als Stabilisatoren werden beispielsweise Phosphorverbindungen wie Phosphorsäure oder Phosphorsäureester eingesetzt.

Die Gesamtdicke der Polyesterfolie nach der vorliegenden Erfindung kann innerhalb weiter Grenzen variieren. Sie beträgt 12 bis 250 μm, bevorzugt 23 bis 200 μm, insbesondere bevorzugt 36 bis 150 μm, wobei die Basisschicht (B) einen Anteil von bevorzugt 50 bis 95 % an der Gesamtfolienstärke einnimmt.

## Herstellungsverfahren

Gegenstand der vorliegenden Erfindung ist auch ein Verfahren zur Herstellung der erfindungsgemäßen Folien. Es umfasst folgende Schritte:

Herstellen einer mehrschichtigen Folie aus einer Basisschicht (B) und mindestens einer Deckschicht (A) durch Koextrusion und Ausformen der Schmelzen zu einem flachen Schmelzefilm sowie im Anschluss daran
Herstellen einer vorgefertigten Folie durch Abkühlen des Schmelzefilms auf einer Abzugswalze,
biaxiales Strecken der vorgefertigten Folie in Längs- und Querrichtung und
Thermofixieren der biaxial gestreckten Folie.

Zunächst wird das Polymer bzw. die Polymermischung der einzelnen Schichten in einem Extruder komprimiert und verflüssigt. Zum Ausformen der Schmelzen zu einem flachen Schmelzefilm werden die Schmelzen gleichzeitig durch eine Breitschlitzdüse gepresst, und die ausgepresste mehrschichtige Folie wird auf einer oder mehreren Abzugswalzen abgezogen, wobei die Schmelze abkühlt und sich zu einer vorgefertigten Folie verfestigt.

Die biaxiale Streckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) gestreckt. Das Strecken in Längsrichtung lässt sich mit Hilfe zweier entsprechend dem angestrebten Streckverhältnis verschieden schnell laufender Walzen durchführen. Zum Strecken in Querrichtung benutzt man allgemein einen entsprechenden Kluppenrahmen.

Die Temperatur, bei der die biaxiale Verstreckung von Polyester im Allgemeinen durchgeführt werden kann, kann in einem relativ großen Bereich variieren und richtet sich nach den gewünschten Eigenschaften der Folie. Die Längsstreckung wird im Allgemeinen bei ca. 80 bis 140 °C und die Querstreckung bei ca. 80 bis 150 °C durchgeführt. Das Längsstreckverhältnis (Lambda-MD) liegt dabei im Bereich von 2,0 zu 1 bis 5 zu 1. Das Querstreckverhältnis (Lambda-TD) liegt im Allgemeinen im Bereich von 2,5 zu 1 bis 5,0 zu 1. Vor der Querstreckung kann man eine oder beide Oberflächen der Folie nach den bekannten Verfahren in-line beschichten. Die In-line-Beschichtung kann beispielsweise zu einer verbesserten Haftung einer eventuell später aufzubringenden Druckfarbe, aber auch zur Verbesserung des antistatischen Verhaltens oder des Verarbeitungsverhaltens dienen.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie abgekühlt und in üblicher Weise aufgewickelt.

Bevorzugt werden nach der biaxialen Streckung eine oder beide Oberflächen der Folie nach einer der bekannten Methoden zusätzlich corona- oder flammbehandelt. Die Behandlungsintensität liegt im Allgemeinen über 50 mN/m.

Die erfindungsgemäße Folie eignet sich als Verpackungsmaterial für Nahrungs- und Genussmittel, insbesondere als Deckelfolie für Lebensmittelbehältnisse wie z. B. Joghurtbecher. Die Folie eignet sich daneben hervorragend zur Verpackung von feuchtigkeits- und/oder luftempfindlichen Nahrungs- und Genussmitteln, die ebenfalls in solchen Bechern verpackt werden.

Die Folie nach der vorliegenden Erfindung weist daneben hervorragende optische Eigenschaften auf, sie zeigt hervorragende Weiterverarbeitungseigenschaften und eine ausgezeichnete Rollenaufmachung. Die Folie eignet sich auf Grund ihres sehr guten Handlings und ihrer sehr guten Verarbeitungseigenschaften insbesondere für die Verarbeitung auf schnelllaufenden Maschinen. Außerdem besticht die Folie durch einen hervorragenden Weißgrad und eine metallisch glänzende Deckschicht (A), die der Folie zusätzlich ein sehr attraktives und werbewirksames Aussehen verleiht.

Bei der Herstellung der Folie ist gewährleistet, dass das Regenerat, das z. B. als Verschnitt während der Folienherstellung anfällt, in einer Menge von ca. 20 bis 60 Gew.-%, bezogen auf das Gesamtgewicht der Folie, wieder der Extrusion zugeführt werden kann, ohne dass dabei die physikalischen und optischen Eigenschaften der Folie negativ beeinflusst werden.

Die nachfolgende Tabelle (Tabelle 1) fasst die wichtigsten erfindungsgemäßen Folieneigenschaften noch einmal auf einen Blick zusammen:

**Tabelle 1**

| | bevorzugt | besonders bevorzugt | ganz besonders bevorzugt | Einheit | Messmethode |
|---|---|---|---|---|---|
| **Basisschicht (B)** | | | | | |
| Konzentration an weißfärbendem Füllstoff | 3,0 bis 15,0 | 3,5 bis 14,0 | 4,0 bis 13,0 | % | intern |
| **Deckschicht (A)** | | | | | |
| Konzentration an weißfärbendem Füllstoff | 3,0 bis 15,0 | 3,5 bis 14,0 | 4,0 bis 13,0 | % | intern |
| Füllstoffkonzentration des Schichtsilikats (Glimmer) | 0,5 bis 15,0 | 1,0 bis 14,0 | 1,5 bis 13,0 | % | intern |
| Partikeldurchmesser $d_{50}$ des Schichtsilikats (Glimmer) | 0,5 bis 20,0 | 1,0 bis 17,5 | 1,5 bis 15,0 | $\mu$m | s. Beschreibung |
| Füllstoffkonzentration des Rußes | 0,001 bis 0,2 | 0,005 bis 0,15 | 0,01 bis 0,10 | % | intern |
| Dicke der Deckschicht | 1 bis 8 | 1,5 bis 7,0 | 2,0 bis 6,0 | $\mu$m | intern |
| Glanz (60°) | <45 | <40 | <35 | | DIN 67530 |
| **Eigenschaften der Folie** | | | | | |
| Dicke der Folie | 12 bis 250 | 23 bis 200 | 36 bis 150 | $\mu$m | intern |
| Weißgrad der Folie (Deckschicht (A)) | >50 | >53 | >56 | | s. Beschreibung |
| Transparenz der Folie | <10 | <8 | <6 | % | ASTM 1033-77 |
| Gelbzahl der Folie | <100 | <90 | <80 | | ASTM 1925-70 |

Zur Charakterisierung der Rohstoffe und der Folien wurden im Rahmen der vorliegenden Anmeldung folgende Messmethoden benutzt:

DIN =          Deutsches Institut für Normung
ASTM =      American Society for Testing and Materials

**Transparenz**

Die Transparenz wird in Anlehnung an ASTM-D 1033-77 gemessen.

**Gelbzahl**

Die Gelbzahl der Folie wird nach ASTM D 1925-70 mittels eines Spektralphotometers Typ Lambda 12 der Firma Perkin Elmer (USA), Normlichtart D65, 10° Normalbeobachter bestimmt. Aus den gemessenen Normfarbwerten X, Y, Z erfolgt die Berechnung der Gelbzahl YI gemäß der Gleichung

$$YI = [100 \cdot (1{,}28 \cdot X - 1{,}06 \cdot Z)] / Y$$

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weissstandard wird ein Pressling aus Bariumsulfat (DIN 5033, Teil 9) verwendet. Eine ausführliche Beschreibung ist z.B. in Hans Loos, Farbmessung, Verlag Beruf und Schule, Itzehoe (1989) angegeben.

**SV-Wert (Standard Viskosität)**

Die Standardviskosität SV (DCE) wird, angelehnt an DIN 53726, in Dichloressigsäure bei einer Temperatur von 25 °C gemessen. Die intrinsische Viskosität (IV) berechnet sich wie folgt aus der Standardviskosität:

$$IV \ (DCE) = 6{,}907 \cdot 10^{-4} \ SV \ (DCE) + 0{,}063096 \ [dl/g]$$

**Glanz**

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos.

**Messung des mittleren Durchmessers $d_{50}$**

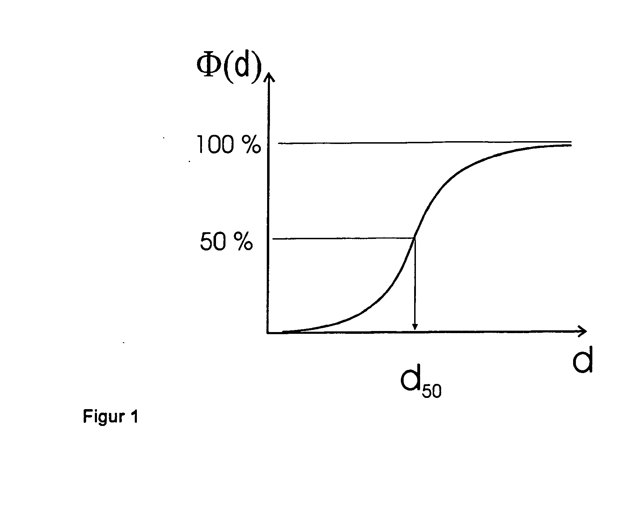

Die Bestimmung des mittleren Durchmessers $d_{50}$ wird mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes.
Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschen $d_{50}$-Wert. Wie das zu verstehen ist, wird in Figur 1 näher verdeutlicht.

**Kontaktwinkelmessung**

Die Bestimmung der Kontaktwinkel erfolgt mittels DAS-100-Messgerätes der Firma Krüss GmbH, Deutschland.

**Beispiel 1**

Chips aus Polyethylenterephthalat enthaltend Titandioxid vom Rutil-Typ als Weißpigment wurden über eine Zeitdauer von 2 h bei einer Temperatur von 155 °C getrocknet und dem Extruder für die Basisschicht (B) zugeführt. Parallel dazu wurden Chips aus Polyethylenterephthalat enthaltend Rutil-Titandioxid als weißfärbendem Pigment und Chips enthaltend beschichteten Glimmer und Ruß unter den gleichen Bedingungen getrocknet und dem Extruder für die Deckschicht (A) zugeführt. Weitere Chips für die Deckschicht (C) enthaltend ein Titandioxid und ein Antiblockmittel für die bessere Wickelbarkeit wurden ebenfalls getrocknet und dem Extruder für die Deckschicht (C) zugeführt.
Dann wurde durch Koextrusion und anschließende stufenweise Orientierung in Längs- und Querrichtung eine weiße, dreischichtige Folie mit ABC-Aufbau und einer Gesamtdicke von 50 µm hergestellt. Die Dicke der Deckschichten (A) und (C) betrug jeweils 5 µm.
Deckschicht (A), Mischung aus:

| 56 | Gew.-% | Polyethylenterephthalat mit einem SV-Wert von 800, |
| 14 | Gew.-% | Masterbatch der Fa. Sukano (Schindellegi, CH) mit 50 Gew.-% Titandioxid (mittlerer Teilchendurchmesser Titandioxid ca. 0,3 μm) und |
| 30 | Gew.-% | Masterbatch aus 69,99 Gew.-% Polyethylenterephthalat (SV-Wert von 800) und 30 Gew.-% Iriodin 111 (mit Titandioxid und Zinnoxid beschichtetes Schichtsilikat der Fa. Merck, DE, $d_{50}$-Wert = 12 μm) und 0,01 % Ruß der Sorte Black Pearls 4750 der Fa. Cabot. |

Basisschicht (B), Mischung aus:

| 86 | Gew.-% | Polyethylenterephthalat mit einem SV-Wert von 800 und |
| 14 | Gew.-% | Masterbatch der Fa. Sukano (Schindellegi, CH) mit 50 Gew.-% Titandioxid (mittlerer Teilchendurchmesser Titandioxid ca. 0,3 μm). |

Deckschicht (C), Mischung aus:

| 70 | Gew.-% | Polyethylenterephthalat mit einem SV-Wert von 800, |
| 14 | Gew.-% | Masterbatch der Fa. Sukano (Schindellegi, CH) mit 50 Gew.-% Titandioxid (mittlerer Teilchendurchmesser Titandioxid ca. 0,3 μm) und |
| 16 | Gew.-% | Masterbatch aus 97,5 Gew.-% Polyethylenterephthalat (SV-Wert von 800) und 2,5 Gew.-% Sylobloc 44 H (synthetisches $SiO_2$ der Fa. Grace, mittl. Durchmesser = 2,5 μm) |

Die Herstellungsbedingungen in den einzelnen Verfahrensschritten waren:

| Extrusion | Temperaturen | | A-Schicht: | 280 | °C |
|---|---|---|---|---|---|
| | | | B-Schicht: | 280 | °C |
| | | | C-Schicht: | 280 | °C |
| | Temperatur der Abzugswalze | | | 20 | °C |
| Längsstreckung | Aufheiztemperatur | | | 70-90 | °C |
| | Strecktemperatur | | | 85 | °C |
| | Längsstreckverhältnis | | | 3,2 | |
| Querstreckung | Aufheiztemperatur | | | 100 | °C |
| | Strecktemperatur | | | 115 | °C |
| | Querstreckverhältnis | | | 3,8 | |
| Fixierung | Temperatur | | | 230 | °C |
| | Dauer | | | 3 | s |

Es wurde eine Folie mit einer sehr guten Optik (Transparenz, Gelbzahl, Weißgrad) und einem sehr guten Verarbeitungsverhalten erhalten. Die Folie zeigte auf der A-Seite das gewünschte metallische Aussehen.

**Beispiel 2**

Im Vergleich zu Beispiel 1 wurde jetzt nur die Zusammensetzung der Deckschicht (A) geändert. Zusätzlich wurde die Folie nach der Längsstreckung und vor der Querstreckung auf der Deckschicht (C) in-line mit einem Acrylatcopolymer beschichtet. Dabei wurde eine Acrylatcopolymerbeschichtung verwendet, die in Beispiel 1 in EP 0 144 948 B2 beschrieben ist. Das Trockengewicht der Beschichtung betrug 0,035 g/m$^2$ bei einer Trockenbeschichtungsdicke von 0,03 μm. Der Kontaktwinkel mit Wasser auf der Deckschicht (C) betrug 72,9°.

Alle anderen Parameter wurden wie in Beispiel 1 beibehalten.

Deckschicht (A), Mischung aus:

| 36 | Gew.-% | Polyethylenterephthalat mit einem SV-Wert von 800, |
| 14 | Gew.-% | Masterbatch der Fa. Sukano (Schindellegi, CH) mit 50 Gew.-% Titandioxid (mittlerer Teilchendurchmesser Titandioxid ca. 0,3 μm) und |

(fortgesetzt)

| 50 | Gew.-% | Masterbatch aus 69,99 Gew.-% Polyethylenterephthalat (SV-Wert von 800) und 30 Gew.-% Iriodin 111 Rutil Feinsatin (mit Titandioxid und Zinnoxid beschichteter Glimmer der Fa. Merck, DE, $d_{50}$-Wert = 12 $\mu$m) und 0,01 % Ruß Black Pearls 4750 der Fa. Cabot. |

Es wurde eine Folie mit einer sehr guten Optik (Transparenz, Gelbzahl, Weißgrad) und einem sehr guten Verarbeitungsverhalten erhalten. Erfindungsgemäß besitzt die Folie eine metallisch-glänzende Schicht. Eine Metallisierung für das werbewirksame Aussehen ist nicht erforderlich. Die Folie kann durch die Anwesenheit der acrylischen Haftvermittlung auf der freien Oberfläche der Deckschicht (C) mit herkömmlichen Druckfarben bedruckt werden.

Vergleichsbeispiel 1

Es wurde das Beispiel 1 modifiziert und als folgenden ABA-Aufbau gefahren:
Basisschicht (B):

| 86 | Gew.-% | Polyethylenterephthalat mit einem SV-Wert von 800 und |
| 14 | Gew.-% | Masterbatch der Fa. Sukano (Schindellegi, CH) mit 50 Gew.-% Titandioxid (mittlerer Teilchendurchmesser Titandioxid ca. 0,3 $\mu$m). |

Deckschicht (A) und Deckschicht (C), Mischung aus:

| 70 | Gew.-% | Polyethylenterephthalat mit einem SV-Wert von 800, |
| 14 | Gew.-% | Masterbatch der Fa. Sukano (Schindellegi, CH) mit 50 Gew.-% Titandioxid (mittlerer Teilchendurchmesser Titandioxid ca. 0,3 $\mu$m) und |
| 16 | Gew.-% | Masterbatch aus 97,5 Gew.-% Polyethylenterephthalat (SV-Wert von 800) und 2,5 Gew.-% Sylobloc 44 H (synthetisches $SiO_2$ der Fa. Grace, Durchmesser = 2,5 $\mu$m). |

Alle anderen Parameter aus Beispiel 1 wurden beibehalten. Die Folie erfüllte nicht die geforderten optischen Eigenschaften (Transparenz, Glanz). Die werbewirksame metallisch-glänzende Schicht war nicht vorhanden. Um diese metallisch-glänzende Schicht nachträglich aufzubringen, wäre ein weiterer Arbeitsschritt, z. B. eine Metallisierung, erforderlich.

**Vergleichsbeispiel 2**

Die Folie aus Vergleichsbeispiel 1 wurde in einem weiteren Arbeitsschritt mit Aluminium metallisiert. Die Folie erfüllte alle optischen Eigenschaften, war jedoch als Deckelfolie für die Mikrowellenanwendung nicht geeignet.
Die Ergebnisse der erfindungsgemäßen Beispiele und der Vergleichsbeispiele sind nachfolgend in Tabelle 2 zusammengefasst:

**Tabelle 2**

| | Transparenz % | Weißgrad, gemessen von | | Gelbzahl | Glanz (60°) | | metallisch glänzende Deckschicht (A) | Folie geeignet für Mikrowellenofen |
|---|---|---|---|---|---|---|---|---|
| | | Deckschicht (A) | Deckschicht (C) | | Deckschicht (A) | Deckschicht (C) | | |
| Beispiel 1 | 3,4 | 62 | 84 | 69 | 34 | 88 | ja | ja |
| Beispiel 2 | 1,8 | 58 | 80 | 57 | 25 | 87 | ja | ja |
| VB 1 | 28 | 95 | 94 | 38 | 89 | 88 | nein | ja |
| VB 2 | 0,01$^A$ | 95$^B$ | 94$^B$ | 38$^B$ | 89$^B$ | 88$^B$ | ja | nein |
| Zum Vergleichsbeispiel 2:<br>A = gemessen nach Metallisierung<br>B = gemessen vor Metallisierung<br>VB = Vergleichsbeispiel | | | | | | | | |

**Patentansprüche**

1. Weiße, koextrudierte, biaxial orientierte, Polyesterfolie mit einer Basisschicht (B) aus thermoplastischem Polyester und mindestens einer Deckschicht (A) aus thermoplastischem Polyester, **dadurch gekennzeichnet, dass**

a) die Basisschicht (B) - die einen Anteil von 50 bis 95 % an der Gesamtfolienstärke einnimmt - ein weißfärbendes Pigment in einer Konzentration von 3 bis 15 Gew.-% enthält, bezogen auf das Gesamtgewicht der Basisschicht (B), und

b) die Deckschicht (A) neben einem weißfärbenden Pigment in einer Konzentration von 3 bis 15 Gew.-% zusätzlich ein farbgebendes beschichtetes Schichtsilikat in einer Konzentration von 0,5 bis 15 Gew-% und Ruß in einer Konzentration von 0,001 bis 0,2 Gew-%, jeweils bezogen auf das Gesamtgewicht der Deckschicht (A), enthält,

wobei das Schichtsilikat ein Glimmer ist, der mit Rutil-Titandioxid oder mit Titandioxid und Zinnoxidbeschichtet ist.

2. Polyesterfolie nach Anspruch 1, **dadurch gekennzeichnet, dass** sie einen dreischichtigen Aufbau besitzt und neben der Basisschicht (B) und der Deckschicht (A) zusätzlich eine weitere, der Deckschicht (A) gegenüberliegend angeordnete Deckschicht (C) aus thermoplastischem Polyester aufweist, die neben einem weißfärbenden Pigment zusätzlich ein Antiblockmittel enthält.

3. Polyesterfolie nach Anspruch 1 oder 2, **dadurch gekennzeichnet, dass** sie als thermoplastische Polyester Polykondensate aus Ethylenglykol und Terephthalsäure, aus Ethylenglykol und Naphthalin-2,6-dicarbonsäure, aus 1,4-Bis-hydroxymethylcyclohexan und Terephthalsäure sowie aus Ethylenglykol, Naphthalin-2,6-dicarbonsäure und Biphenyl-4,4'-dicarbonsäure enthält.

4. Polyesterfolie nach einem oder nach mehreren der Ansprüche 1 bis 3, **dadurch gekennzeichnet, dass** sie als weißfärbendes Pigment Titandioxid, Calciumcarbonat, Bariumsulfat, Zinksulfid oder Zinkoxid enthält.

5. Polyesterfolie nach einem oder nach mehreren der Ansprüche 1 bis 4, **dadurch gekennzeichnet, dass** sie als weißfärbendes Pigment Titandioxid vom Rutil-Typ oder vom Anatas-Typ enthält, das als Extrusionsmasterbatch dem Originalrohstoff zugegeben wird.

6. Polyesterfolie nach einem oder nach mehreren der Ansprüche 1 bis 5, **dadurch gekennzeichnet, dass** sie als weißfärbendes Pigment Titandioxid vom Rutil-Typ enthält, das eine mittlere Korngröße im Bereich von 0,05 bis 0,5 $\mu$m besitzt.

7. Polyesterfolie nach einem oder nach mehreren der Ansprüche 1 bis 6, **dadurch gekennzeichnet, dass** sie als Schichtsilikat eine anorganische Verbindung enthält mit einer chemischen Zusammensetzung entsprechend der folgenden allgemeinen Formel:

$$I_{0,5\text{-}1} M_{2\text{-}3} [T_4 O_{10} A_2]$$

in der
I: 12-fach koordinierte Kationen ausgewählt aus der Gruppe bestehend aus
Kalium, Natrium, Kalzium, Barium, Rubidium, Cäsium, Ammonium bedeuten, M: 6-fach koordinierte Kationen ausgewählt aus der Gruppe bestehend aus
Lithium, Magnesium, Eisen$^{2+}$, Mangan, Zink, Aluminium, Eisen$^{3+}$, Chrom, Vanadium, Titan bedeuten,
T: 4-fach koordinierte Kationen ausgewählt aus der Gruppe bestehend aus
Silizium, Aluminium, Eisen$^{3+}$, Bor, Beryllium bedeuten und
A: Anionen ausgewählt aus der Gruppe bestehend aus Hydroxid, Fluorid, Chlorid,
Oxid, Sulfid bedeuten.

8. Polyesterfolie nach einem oder nach mehreren der Ansprüche 1 bis 7, **dadurch gekennzeichnet dass** sie einen Weißgrad von größer als 50 besitzt und eine Transparenz von kleiner als 10 % und dass sie weißfärbendes Pigment in einer Konzentration im Bereich von 4 bis 13 Gew.-% enthält, bezogen auf das Gesamtgewicht der das weißfärbende Pigment enthaltenden Schicht.

9. Polyesterfolie nach einem oder nach mehreren der Ansprüche 1 bis 8, **dadurch gekennzeichnet, dass** sie eine Gesamtdicke im Bereich von 12 bis 250 μm besitzt.

10. Verfahren zum Herstellen einer Polyesterfolie nach einem oder nach mehreren der Ansprüche 1 bis 9 durch Koextrusion und Ausformen der Schmelzen zu einem flachen Schmelzefilm, Herstellen einer vorgefertigten Folie durch Abkühlen des flachen Schmelzefilms auf einer oder auf mehreren Abzugswalzen, biaxiales Strecken der vorgefertigten Folie in Längs- und Querrichtung und Thermofixieren der biaxial gestreckten Folie.

11. Verfahren nach Anspruch 10, **dadurch gekennzeichnet, dass** das biaxiale Strecken sequenziell durchgeführt wird, wobei zuerst in Längsrichtung und dann in Querrichtung gestreckt wird und wobei das Längsstreckverhältnis im Bereich von 2,0 zu 1 bis 5 zu 1 und das Querstreckverhältnis im Bereich von 2,5 zu 1 bis 5,0 zu 1 eingestellt wird, und dass die Folie gegebenenfalls zur Thermofixierung über eine Zeitdauer von 0,1 bis 10 s bei einer Temperatur von 150 bis 250 °C gehalten wird und/oder dass gegebenenfalls nach dem biaxialen Strecken eine oder beide Oberflächen der Folie zusätzlich corona- oder flammbehandelt wird, wobei die Behandlungsintensität über 50 mN/m liegt.

12. Verwendung einer Folie nach einem der Ansprüche 1 bis 9, hergestellt nach einem Verfahren der Ansprüche 10 oder 11 als Verpackungsmaterial für Nahrungsund Genussmittel.

13. Verwendung einer Folie nach Anspruch 12 für die Verpackung von feuchtigkeits- und/oder luftempfindlichen Nahrungs- und Genussmitteln.

14. Verwendung einer Folie nach einem oder nach mehreren der Ansprüche 1 bis 9 für die Verarbeitung auf schnelllaufenden Verpackungsmaschinen.

**Claims**

1. A white, coextruded, biaxially oriented, polyester film with a base layer (B) made of thermoplastic polyester and at least one outer layer (A) made of thermoplastic polyester, wherein

   a) the base layer (B) - which makes up a proportion of from 50 to 95 % of the total thickness of the film - comprises a concentration of from 3 to 15 % by weight, based on the total weight of the base layer (B), of a whitening pigment, and
   b) the outer layer (A) also comprises, based in each case on the total weight of the outer layer (A), alongside a concentration of from 3 to 15% by weight of a whitening pigment, a concentration of from 0.5 to 15 % by weight of a coated colorant phyllosilicate and a concentration of from 0.001 to 0.2 % by weight of carbon black,

   where the phyllosilicate is a mica which has been coated with rutile titanium dioxide or with titanium dioxide and tin oxide.

2. The polyester film as claimed in claim 1, which has a three-layer structure, and which also comprises, alongside the base layer (B) and the
   outer layer (A), a further outer layer (C) arranged opposite to the outer layer (A) and made of thermoplastic polyester and also comprising an antiblocking agent, alongside a whitening pigment.

3. The polyester film as claimed in claim 1 or 2, which comprises, as thermoplastic polyesters, polycondensates made of ethylene glycol and terephthalic acid, of ethylene glycol and naphthalene-2,6-dicarboxylic acid, of 1,4-bishydroxymethylcyclohexane and terephthalic acid, or else of ethylene glycol, naphthalene-2,6-dicarboxylic acid and biphenyl-4,4'-dicarboxylic acid.

4. The polyester film as claimed in one or more of claims 1 to 3, which comprises, as whitening pigment, titanium dioxide, calcium carbonate, barium sulfate, zinc sulfide, or zinc oxide.

5. The polyester film as claimed in one or more of claims 1 to 4, which comprises, as whitening pigment, titanium dioxide of the rutile type or of the anatase type, which is added in the form of extrusion masterbatch to the original raw material.

6. The polyester film as claimed in one or more of claims 1 to 5, which comprises, as whitening pigment, titanium dioxide of the rutile type which has an average grain size in the range from 0.05 to 0.5 $\mu$m.

7. The polyester film as claimed in one or more of claims 1 to 6, which comprises, as phyllosilicate, an inorganic compound with a chemical constitution corresponding to the following formula:

$$I_{0.5-1}M_{2-3}[T_4O_{10}A_2]$$

in which
I: is cations having a coordination number of 12, selected from the group consisting of potassium, sodium, calcium, barium, rubidium, cesium, and ammonium,
M: is cations having a coordination number of 6, selected from the group consisting of lithium, magnesium, iron$^{2+}$, manganese, zinc, aluminum, iron$^{3+}$, chromium, vanadium, and titanium,
T: is cations having a coordination number of 4, selected from the group consisting of silicon, aluminum, iron$^{3+}$, boron, and beryllium, and
A: is anions selected from the group consisting of hydroxide, fluoride, chloride, oxide, and sulfide.

8. The polyester film as claimed in one or more of claims 1 to 7, the whiteness of which is greater than 50 and the transparency of which is smaller than 10 %, and which comprises, based on the total weight of the layer comprising the whitening pigment, a concentration in the range from 4 to 13 % by weight of whitening pigment.

9. The polyester film as claimed in one or more of claims 1 to 8, the total thickness of which is in the range from 12 to 250 $\mu$m.

10. A process for producing a polyester film as claimed in one or more of claims 1 to 9 via coextrusion and shaping of the melts to give a flat melt film, producing a prefabricated film via
cooling of the flat melt film on one or more takeoff rolls, biaxial stretching of the prefabricated film longitudinally and transversely, and heat-setting of the biaxially stretched film.

11. The process as claimed in claim 10, wherein the biaxial stretching process is carried out sequentially, by stretching first longitudinally and then transversely, and by setting the longitudinal stretching ratio in the range from 2.0:1 to 5:1 and the transverse stretching ratio in the range from 2.5:1 to 5.0:1, and wherein the film is optionally kept at a temperature of from 150 to 250°C for the heat-setting process for a period of from 0.1 to 10 s, and/or wherein, after the biaxial stretching process, one or both surfaces of the film are also optionally corona-or flame-treated, the intensity of this treatment being above 50 mN/m.

12. The use of a film as claimed in any of claims 1 to 9, produced by a process of claim 10 or 11, as packaging material for foods.

13. The use of a film as claimed in claim 12 for the packaging of foods which are sensitive to moisture and/or to air.

14. The use of a film as claimed in one or more of claims 1 to 9 for processing on high-speed packaging machinery.

**Revendications**

1. Feuille de polyester blanche coextrudée, orientée biaxialement, comprenant une couche de base (B) constituée d'un polyester thermoplastique et au moins une couche de recouvrement (A) constituée de polyester thermoplastique, **caractérisée en ce que**

a) la couche de base (B) - qui constitue une fraction de 50 à 95 % de l'épaisseur de la feuille totale - contient un pigment générant une coloration blanche en concentration de 3 à 15 % en poids par rapport au poids total de la couche de base (B), et
b) la couche de recouvrement (A) contient, en plus d'un pigment générant une coloration blanche en concentration de 3 à 15 % en poids, également un silicate stratifié revêtu exerçant un effet colorant en concentration de 0,5 à 15 % en poids, ainsi que de la suie en concentration de 0,001 à 0,2 % en poids, respectivement, par rapport au poids total de la couche de recouvrement (A),

dans laquelle le silicate stratifié est un mica, qui est

revêtu de rutile-dioxyde de titane ou de dioxyde de titane et d'oxyde d'étain.

2. Feuille de polyester selon la revendication 1, **caractérisée en ce qu'**elle présente une structure à trois couches et présente, en plus de la couche de base (B) et de la couche de recouvrement (A), également une autre couche de recouvrement (C) constituée d'un polyester thermoplastique, aménagée en position opposée par rapport à la couche de recouvrement (A), et qui contient encore, en plus du pigment générant une coloration blanche, un agent antibloquant supplémentaire.

3. Feuille de polyester selon la revendication 1 ou 2, **caractérisée en ce qu'**elle contient comme polyester thermoplastique des polycondensats à base d'éthylèneglycol et d'acide téréphtalique, à base d'éthylèneglycol et d'acide naphtaline-2,6-dicarboxylique, à base de 1,4-bis-hydroxyméthyl-cyclohexane et d'acide téréphtalique et à base d'éthylèneglycol, d'acide naphtaline-2,6-dicarboxylique et d'acide biphényl-4,4'-dicarboxylique.

4. Feuille de polyester selon l'une quelconque ou plusieurs des revendications 1 à 3, **caractérisée en ce qu'**elle contient, comme pigment générant une coloration blanche, du dioxyde de titane, du carbonate de calcium, du sulfate de baryum, du sulfure de zinc ou de l'oxyde de zinc.

5. Feuille de polyester selon l'une quelconque ou plusieurs des revendications 1 à 4, **caractérisée en ce qu'**elle contient, comme pigment générant une coloration blanche, du dioxyde de titane du type rutile ou du type anatase, qui est ajouté, comme mélange maître d'extrusion, à la matière première d'origine.

6. Feuille de polyester selon l'une quelconque ou plusieurs des revendications 1 à 5, **caractérisée en ce qu'**elle contient, comme pigment générant une coloration blanche, du dioxyde de titane du type rutile, qui présente une taille particulaire moyenne dans la plage de 0,05 à 0,5 $\mu$m.

7. Feuille de polyester selon l'une quelconque ou plusieurs des revendications 1 à 6, **caractérisée en ce qu'**elle contient, comme silicate stratifié, un composé inorganique ayant une composition chimique correspondant à la formule générale suivante :

$$I_{0,5-1}M_{2-3}[T_4O_{10}A_2]$$

dans laquelle :

I représente des cations coordonnés 12 fois choisis dans le groupe constitué des éléments potassium, sodium, calcium, baryum, rubidium, césium, ammonium,
M représente des cations coordonnés 6 fois choisis dans le groupe constitué des éléments lithium, magnésium, fer$^{2+}$, manganèse, zinc, aluminium, fer$^{3+}$, chrome, vanadium, titane,
T représente des cations coordonnés 4 fois choisis dans le groupe constitué des éléments silicium, aluminium, fer$^{3+}$, bore, béryllium, et
A représente des anions choisis dans le groupe constitué d'un hydroxyde, d'un fluorure, d'un chlorure, d'un oxyde et d'un sulfure.

8. Feuille de polyester selon l'une quelconque ou plusieurs des revendications 1 à 7, **caractérisée en ce qu'**elle présente un degré de blancheur supérieur à 50 et une transparence inférieure à 10 % et **en ce qu'**elle contient un pigment générant une coloration blanche en concentration dans la plage de 4 à 13 % en poids, par rapport au poids total de la couche contenant le pigment générant une coloration blanche.

9. Feuille de polyester selon l'une quelconque ou plusieurs des revendications 1 à 8, **caractérisée en ce qu'**elle présente une épaisseur totale dans la plage de 12 à 250 $\mu$m.

10. Procédé pour la fabrication d'une feuille de polyester selon l'une quelconque ou plusieurs des revendications 1 à 9 par coextrusion et formage de la masse fondue en un film coulé plat, fabrication d'une feuille pré-élaborée par refroidissement du film coulé plat sur un ou plusieurs cylindres d'extraction, étirage biaxial de la feuille pré-élaborée dans le sens machine et le sens travers et thermofixation de la feuille étirée biaxialement.

11. Procédé selon la revendication 10, **caractérisé en ce que** l'étirage biaxial est réalisé de manière séquentielle, l'étirage étant réalisé d'abord dans le sens machine, puis dans le sens travers, et le rapport d'étirage dans le sens machine étant réglé dans la plage de 2,0 à 1 à 5 à 1 et le rapport d'étirage dans le sens travers étant réglé dans la plage de 2,5 à 1 à 5,0 à 1, et **en ce que** la feuille est éventuellement maintenue pour la thermofixation pendant une période de temps de 0,1 à 10 s à une température de 150 à 250 °C et/ou **en ce que**, éventuellement après l'étirage biaxial, une surface ou les deux surfaces de la feuille est ou sont en outre soumises à un traitement de type corona ou à la flamme, l'intensité du traitement étant supérieure à 50 mN/m.

12. Utilisation d'une feuille selon l'une quelconque des revendications 1 à 9, fabriquée par un procédé selon la revendication 10 ou 11 comme matériau de conditionnement pour des produits alimentaires et des produits de consommation.

13. Utilisation d'une feuille selon la revendication 12 pour le conditionnement de produits alimentaires et de produits de consommation sensibles à l'humidité et/ou à l'air.

14. Utilisation d'une feuille selon l'une quelconque ou plusieurs des revendications 1 à 9 pour application sur des machines de conditionnement fonctionnant à vitesse élevée.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0605130 B1
- EP 1176004 A1
- EP 1489131 A1
- EP 1918096 A
- DE 102005058916 A
- EP 0144948 B2